# FASCICULE DE BREVET EUROPEEN

(11) **EP 3 150 265 B1**
(45) Date de publication et mention de la délivrance du brevet: **12.12.2018**
(21) Numéro de dépôt: 16190529.4
(22) Date de dépôt: 26.09.2016
(51) Int. Cl.: B01D 19/00, B01D 45/16, F02C 6/08, B01D 19/02

(54) **RESERVOIR D HUILE DE TURBOMACHINE AVEC DESAERATEUR**
ÖLTANK EINER TURBOMASCHINE MIT ENTLÜFTER
TURBINE ENGINE OIL RESERVOIR WITH DEAERATOR

(30) Priorité: 02.10.2015 BE 201505611
(43) Date de publication de la demande: 05.04.2017
(73) Titulaire: Safran Aero Boosters SA, 4041 Herstal (BE)
(72) Inventeur: RAIMARCKERS, Nicolas, 4263 Tourinne (Braives) (BE); CORNET, Albert, 4800 Verviers (BE); SERVAIS, Bruno, 4230 Braives (BE); BOUGELET, Stéphane, 5170 Profondeville (BE)
(74) Mandataire: Lecomte & Partners

(56) Documents cités:
- EP-A1- 0 404 647
- EP-A1- 2 199 614
- EP-A2- 0 400 202
- FR-A5- 2 054 388
- JP-U- H 061 710
- US-A- 5 254 145

## Description

### Domaine technique

L'invention se rapporte au domaine des dispositifs désaérateurs d'huile. Plus précisément, l'invention concerne un réservoir d'huile moteur muni d'un désaérateur et d'un évent d'évacuation du gaz extrait de l'huile. L'invention propose également une turbomachine, notamment un turboréacteur d'avion ou un turbopropulseur d'aéronef.

### Technique antérieure

Un turboréacteur multiflux comporte plusieurs rotors indépendants qui sont articulés par rapport au carter statorique. Leurs liaisons pivots s'effectuent grâce à plusieurs paliers lubrifiés dans des enceintes où règne un brouillard d'huile. De l'huile est projetée sur les roulements puis est collectée pour retourner dans le réservoir d'huile du turboréacteur. Lors du fonctionnement, un mélange air-huile se forme et réduit les capacités de l'huile.

Pour réduire les effets des bulles d'air dans ce mélange, le réservoir est associé à un dispositif désaérateur permettant de séparer l'air de l'huile, puis de renvoyer l'air dans l'environnement. Un dispositif désaérateur peut être du type statique et fonctionner selon un principe de vortex ; où le mélange air-huile tourne à l'intérieur du réservoir pour favoriser la séparation des deux phases.

Le document EP 1 297 875 A1 divulgue un circuit de lubrification d'un turboréacteur à carter sec. Le circuit est doté d'un dispositif désaérateur d'un mélange air-huile intégré au réservoir d'huile du turboréacteur. Le mouvement de rotation de l'huile à l'intérieur d'une cuve permet d'en extraire l'air. Cet air est ensuite évacué à l'aide d'un évent en partie supérieure. Le dispositif désaérateur est également doté d'un restricteur contrôlant la circulation via l'évent. Le restricteur est relié à un flotteur porté par le niveau d'huile, ce qui permet de s'adapter tant au débit qu'à la teneur en air du mélange air-huile.

Néanmoins, l'air évacué par l'évent comporte généralement de l'huile sous forme de gouttelettes. Le relâchement de ces dernières dans l'environnement augmente la consommation en huile du turboréacteur, et donc d'augmenter la quantité d'huile stockée pour ne pas en manquer. Cela n'est pas satisfaisant puisque le turboréacteur est d'alourdi et que l'aéronef correspondant consomme davantage de carburant pour sa sustentation.

Le document EP2199614 (A1) divulgue un turboréacteur comprenant une machine combinée de pompage et de séparation en deux phases distinctes purifiées. La machine comporte un rotor à aubes, se trouvant dans une cavité à paroi tronconique.

Le document US5254145 A divulgue un turboréacteur présentant un circuit de lubrification avec un réservoir. Ce dernier présente un séparateur à effet centrifuge permettant d'extraire l'air contenu dans l'huile. Le séparateur comporte un rotor entrainé par un flux d'huile.

### Résumé de l'invention

### Problème technique

L'invention a pour objectif de résoudre au moins un des problèmes posés par l'art antérieur. Plus précisément, l'invention a pour objectif de réduire les pertes en huile d'un dispositif désaérateur. L'invention a également pour objectif d'améliorer le fonctionnement d'un circuit d'huile. L'invention a également pour objectif de proposer une solution simple, résistante, légère, économique, et fiable.

### Solution technique

L'invention a pour objet un réservoir d'huile selon la revendication 1.

Selon un mode avantageux de l'invention, l'évent comprend un conduit entourant le rotor, dans le sens normal de montage l'huile présente sur la surface interne du conduit retourne éventuellement par gravitation dans l' enceinte.

Selon un mode avantageux de l'invention, le dispositif est configuré de manière à ce que la rotation du rotor entraîne la centrifugation de l'air de désaération évacué via l'évent.

Selon un mode avantageux de l'invention, la portion entraînée est en forme de roue, ou de vis.

Selon un mode avantageux de l'invention, la portion entraînée est disposée en regard de l'arrivée d'huile, et/ou dans l'évent, éventuellement dans le conduit.

Selon un mode avantageux de l'invention, la portion entraînée est disposée à l'intérieur de l'arrivée d'huile.

Selon un mode avantageux de l'invention, la portion entraînée comprend une rangée annulaire d'aubes s'étendant axialement ou radialement par rapport à l'axe de rotation du rotor.

Selon un mode avantageux de l'invention, le rotor comprend une portion filtrante avec de la mousse disposée à l'intérieur de l'évent, notamment à l'intérieur de la surface interne, et/ou la portion filtrante est renfermée dans l'évent, éventuellement dans le conduit.

Selon un mode avantageux de l'invention, la portion filtrante et/ou sa mousse est disposée dans le conduit.

Selon un mode avantageux de l'invention, la longueur du conduit est supérieure à sa largeur, éventuellement au moins deux fois supérieure.

Selon un mode avantageux de l'invention, dans le sens normal de montage, l'évent est à axe vertical.

Selon un mode avantageux de l'invention, l'évent comprend une couche de mousse solidaire de l'enceinte, ladite couche étant en regard du rotor, éventuellement en aval ou autour du rotor.

Selon un mode avantageux de l'invention, l'évent comprend une pluralité de couches en mousse solidaires de l'enceinte, le rotor comprenant au moins un, préférentiellement plusieurs disques en mousse, les couches et chaque disque rotorique formant une alternance.

Selon un mode avantageux de l'invention, l'arrivée comprend un canal d'arrivée qui débouche de manière tangentielle dans l'enceinte.

Selon un mode avantageux de l'invention, l'arrivée comprend un module de réduction de sa section de passage de sorte à pouvoir y augmenter la vitesse d'écoulement du mélange.

Selon un mode avantageux de l'invention, le dispositif comprend un module d'échangeur de chaleur.

Selon un mode avantageux de l'invention, l'évent est au même niveau que l'arrivée d'huile.

Selon un mode avantageux de l'invention, l'enceinte comprend une poche de largeur réduite, éventuellement cylindrique, dans laquelle est disposé le rotor, et/ou dans laquelle débouche l'arrivée du mélange air-huile.

Selon un mode avantageux de l'invention, le rotor est au moins partiellement ou totalement disposé dans l'évent.

Selon un mode avantageux de l'invention, le volume interne de l'enceinte est supérieur à 0,50 L, préférentiellement supérieur ou égal à 3L, plus préférentiellement supérieur ou égal à 20 L, éventuellement supérieur ou égal à 40L.

Selon un mode avantageux de l'invention, le réservoir a une forme générale arquée, préférentiellement le réservoir forme un cylindre arqué ou une plaque arquée.

Selon un mode avantageux de l'invention, l'évent comprend une surface interne entourant le rotor et/ou en regard du rotor, ladite surface étant adaptée pour collecter des gouttelettes d'huile.

Selon un mode avantageux de l'invention, dans le sens normal de montage, l'évent est disposé en partie haute de l'enceinte.

Selon un mode avantageux de l'invention, le réservoir comprend une cloison délimitant l'enceinte, la cloison étant éventuellement d'épaisseur constante.

Selon un mode avantageux de l'invention, le réservoir comprend un bouchon de remplissage, notamment en partie supérieure dans le sens normal de montage, préférentiellement le réservoir présente une forme allongée avec deux extrémités principales opposées, l'évent et le bouchon étant sur la même extrémité.

Selon un mode avantageux de l'invention, au moins une ou chaque ou plusieurs mousses sont des mousses métalliques.

Selon un mode avantageux de l'invention, le rotor est majoritairement ou totalement dans l'emprise de l'enceinte. La proportion est mesurée en masse ou longitudinalement selon l'axe de rotation du rotor.

Selon un mode avantageux de l'invention, la portion entraînée forme une turbine apte à recevoir un travail mécanique fourni par la circulation du mélange air-huile.

Selon un mode avantageux de l'invention, le dispositif comprend une sortie d'huile dégazée, éventuellement opposée à l'arrivée et/ou à l'évent.

Selon un mode avantageux de l'invention, le canal d'arrivé est apte à permettre un écoulement du mélange air-huile tangentiel à la surface interne de l'enceinte, et/ou apte à former un vortex dans le mélange air-huile contenu dans l'enceinte.

Selon un mode avantageux de l'invention, le dispositif est configuré de manière à ce que la rotation du rotor entraîne la projection, notamment par force centrifuge, des gouttelettes d'huile en suspension dans l'air contre la surface interne de l'évent.

La fonction de désaérateur n'est pas indispensable à l'invention. L'invention propose également un réservoir d'huile, notamment de turbomachine, le réservoir comprenant : une enceinte destinée à contenir de l'huile, notamment une enceinte de désaération d'un mélange air-huile ; une arrivée du mélange dans l'enceinte ; un évent en communication avec l'arrivée du mélange via l'enceinte et/ou permettant une communication entre l'enceinte et l'environnement du réservoir ; remarquable en ce qu'il comprend au niveau de l'évent un rotor configuré pour permettre la récupération de gouttelettes d'huile en suspension dans l'air le traversant.

L'invention a également pour objet une turbomachine comprenant un réservoir d'huile, remarquable en ce que le réservoir d'huile est conforme à l'invention, préférentiellement la turbomachine comprend un circuit d'huile avec une pompe en communication avec le dispositif désaérateur d'huile ; et/ou la turbomachine comprend un réservoir conforme à l'invention.

Selon un mode avantageux de l'invention, la turbomachine comprend deux parois annulaires concentriques radialement distantes, le dispositif étant disposé entre lesdites parois.

Selon un mode avantageux de l'invention, le circuit d'huile comprend en outre des chambres de lubrification avec des paliers et des joints d'étanchéité.

Selon un mode avantageux de l'invention, la pompe est configurée pour que la pression du mélange air-huile à l'arrivée soit supérieure ou égale à 0.5 bar, préférentiellement supérieure ou égale 3 bars, préférentiellement supérieure ou égale 7 bars.

Selon un mode avantageux de l'invention, le réservoir épouse au moins une des parois annulaires, préférentiellement chaque paroi annulaire.

Selon un mode avantageux de l'invention, la pompe est en aval du dispositif désaérateur et refoule du mélange pressurisé via l'arrivée du réservoir.

Selon un mode avantageux de l'invention, la turbomachine comprend un compresseur haute pression avec un carter externe, le réservoir étant disposé axialement au niveau dudit compresseur haute pression, et étant éventuellement fixé audit carter externe.

Selon un mode avantageux de l'invention, la pompe est une pompe volumétrique.

De manière générale, les modes avantageux de chaque objet de l'invention sont également applicables aux autres objets de l'invention. Dans la mesure du possible, chaque objet de l'invention est combinable aux autres objets.

### Avantages apportés

L'invention permet de traiter l'écoulement via l'évent, et de rendre l'air libéré plus propre. La phase liquide présente dans l'air est récupérée, ce qui évite tout relargage. Le rotor permet de récupérer directement et indirectement les gouttelettes d'huile. La mousse brasse le gaz dans l'évent pour que les gouttelettes s'y collent. Le tourbillon créé dans l'évent permet de projeter les gouttelettes contre la surface de l'évent. Cette surface collecte les gouttelettes et offre un support pour qu'elles s'écoulent vers l'enceinte.

La solution offerte par l'invention est simple et fiable puisqu'elle ne nécessite qu'un seul élément qui fonctionne de manière passive. Aucune source d'énergie externe n'est nécessaire dans la mesure où l'écoulement du mélange suffit à la rotation du rotor. Ce fonctionnement est sobre en énergie car l'énergie prélevée sur le mélange est destiné à être dissipée. L'action de la gravité s'inscrit également dans une économie d'énergie et dans la fiabilité.

### Brève description des dessins

La figure 1 représente une turbomachine axiale selon l'invention.
La figure 2 est un schéma d'un réservoir d'huile selon l'invention selon un premier mode de réalisation de l'invention.
La figure 3 illustre un évent selon un deuxième mode de réalisation de l'invention.

### Description des modes de réalisation

Dans la description qui va suivre, les termes intérieur ou interne et extérieur ou externe renvoient à un positionnement par rapport à l'axe de rotation d'une turbomachine axiale. La direction axiale correspond à la direction le long de l'axe de rotation d'un rotor de l'évent. La direction radiale est perpendiculaire à l'axe de rotation.

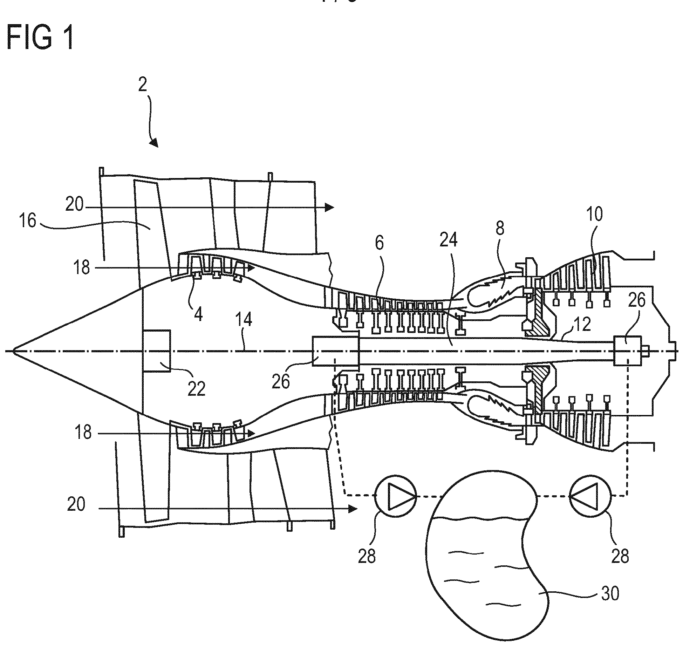

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'arrivée de la chambre de combustion 8.

Un ventilateur d'arrivée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Des moyens de démultiplication, tel un réducteur épicycloïdal 22, peut réduire la vitesse de rotation de la soufflante 16 et/ou du compresseur basse pression 4 par rapport à la turbine 10 associée. Le flux secondaire 20 peut être accéléré de sorte à générer une réaction de poussée.

Les flux primaire 18 et secondaire 20 sont des flux annulaires radialement concentriques. Leurs circulations progressives deviennent permises grâce à plusieurs rotors 12 avec des arbres 24 indépendants. Ces arbres 24 peuvent être coaxiaux et emmanchés l'un dans l'autre. Ils sont mobiles en rotation via des paliers 26 à leurs interfaces avec le carter de la turbomachine 2, ou même à l'aide de paliers à leurs interfaces communes.

Le refroidissement et/ou la lubrification des paliers 26 et de l'optionnel réducteur épicycloïdal 22 sont assurées par un circuit d'huile, éventuellement fermé. Ce dernier peut en outre alimenter des actionneurs tels des vérins (non représentés). Le circuit d'huile peut également comprendre un échangeur de chaleur (non représentés) pour refroidir l'huile. Les paliers 26 sont disposés dans des chambres, généralement étanchéifiés grâce à des joints autour des arbres, où ils sont aspergés d'huile. Au contact des paliers 26, l'huile se charge en air, si bien que l'huile récupérée est devenue un mélange air-huile liquide, par exemple avec au moins 1% volumique d'air.

Les chambres formant éventuellement des carters secs, sont munies d'orifices d'aspiration, également appelés orifices de drainage, en communication avec des pompes 28. Les pompes 28 peuvent être du type pompe volumétrique, par exemple pour maîtriser le débit. Le circuit d'huile peut ainsi comprendre plusieurs lignes de récupération d'huile convergeant vers un réservoir 30, éventuellement principal. Le réservoir 30 est également le point de départ de plusieurs lignes d'alimentation (non représentées) des paliers 26 et des divers équipements. Le réservoir 30 peut être fixé à la nacelle de la turbomachine. Il peut être placé entre deux parois annulaires guidant des flux concentriques ; par exemple le flux secondaire 20 et le flux entourant la turbomachine, ou le flux primaire 18 et le flux secondaire 20.

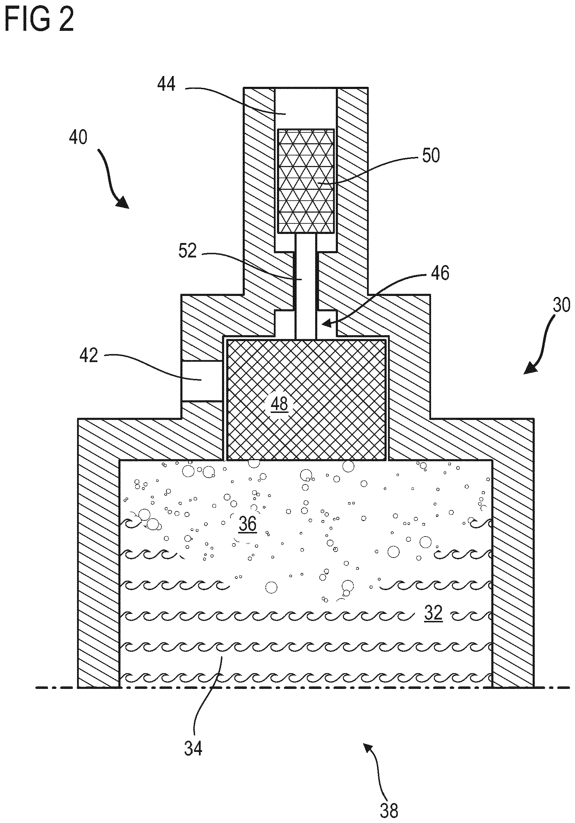

La figure 2 est une vue en coupe d'une portion supérieure d'un réservoir 30 d'huile tel que celui de la figure 1. Le réservoir 30 est partiellement rempli, sa partie inférieure 32 contient un mélange air-huile 34 liquide, et la partie supérieure 36 contient une phase majoritairement gazeuse dans laquelle subsistent des gouttelettes d'huile en suspension.

Le réservoir 30 forme une enceinte 38, tel un réceptacle avec un volume utile pour contenir de l'huile. Le réservoir 30 est doté d'un dispositif désaérateur 40 permettant de séparer l'air de l'huile combinés dans le mélange 34. L'arrivée 42 du mélange air-huile 34 peut s'effectuer de manière tangentielle à la surface interne de l'enceinte 38. Par ce biais, la vitesse d'admission du mélange 34 dans l'enceinte 38 génère un mouvement de rotation de la quantité d'huile déjà présente dans l'enceinte 38. Un vortex se crée, et l'interface gaz-liquide devient parabolique. Les bulles d'air du mélange 34 tendent à regagner l'interface. L'huile appauvrie en air devient plus dense et se concentre en partie inférieure de l'enceinte, contre la paroi de cette dernière. Là, l'huile rendue homogène est prélevée pour être à nouveau utilisée dans les équipements du circuit d'huile.

Le réservoir 30 comprend un évent 44. Celui-ci peut être occupé par le dispositif de désaération 40. La communication entre l'enceinte 38 et l'évent 44 peut s'effectuer via le dispositif de désaération 40. L'évent 44 comprend un rotor 46. Son axe de rotation peut être selon la direction de circulation de l'air sortant du réservoir 30 via l'évent 44.

Le rotor 46 peut comprendre une portion entraînée 48 recevant au moins une partie de l'énergie cinétique du mélange air-huile 34 à l'arrivée 42. Cette portion entraînée bénéficie de la pression dynamique du mélange, et permet le mouvement de rotation du rotor. La portion entraînée 48 convertit le mouvement du mélange 34 en un mouvement de rotation du rotor 46. La portion entraînée 48 peut être en mousse. Elle peut être un disque avec une rangée annulaire d'aubes ou d'augets qui reçoivent et captent l'énergie de l'écoulement du mélange 34.

La section de passage de l'arrivée 42 peut être calibrée pour entrainer le rotor 46 à une vitesse de rotation prédéterminée. Eventuellement, l'arrivée est équipée d'un module réduisant sa section de passage afin d'accélérer la vitesse d'admission du mélange, et donc pour piloter la vitesse de rotation du rotor. La portion entraînée 48 peut être disposée dans une poche dédiée de l'enceinte 38 ; la surface interne de la poche peut généralement épouser la portion entraînée 48. L'arrivée 42 du mélange 34 peut déboucher dans la poche de manière à rencontrer la portion entraînée 48 en l'actionnant.

Le rotor 46 peut comprendre une portion filtrante 50, par exemple disposée dans l'évent 44 ou en entrée de l'évent. La portion filtrante 50 peut comprendre de la mousse, éventuellement métallique. Les mailles communicantes de la mousse permettent à l'air de désaération de traverser le rotor 46, et de s'enfuir via l'évent 44. La portion filtrante 50 est reliée à la portion entraînée 48 via une tige 52 montée mobile en rotation par rapport à la paroi du réservoir 30, et en particulier du conduit de l'évent 44.

Le mouvement de rotation de la portion filtrante 50 permet plusieurs actions. Il permet d'extraire par centrifugation l'huile que la portion filtrante 50 a captée, et de projeter cette huile contre la surface interne de l'évent 44. Dans le sens normal de montage, l'huile projetée sur la surface interne retombe depuis le conduit par gravitation dans l'enceinte 38 et s'ajoute au volume d'huile qui y est déjà présent. Le mouvement de rotation entraîne également en rotation l'air de désaération, si bien que les gouttelettes en suspension viennent s'agglutiner à la surface interne du conduit de l'évent. Ceci est également le fruit de la force centrifuge ; qui précède encore la gravité permettant le retour de l'huile dans l'enceinte 38 en contrebas. Notons que la portion entraînée peut contribuer à la rotation de l'air dans l'évent 44.

La surface interne du conduit de l'évent 44 est en regard du rotor 46 et l'entoure. Elle peut être lisse, ou être tapissée de mousse captant des gouttelettes d'huile tout autour du rotor. L'huile qui y est recueillie peut ensuite s'écouler pour regagner l'enceinte 38.

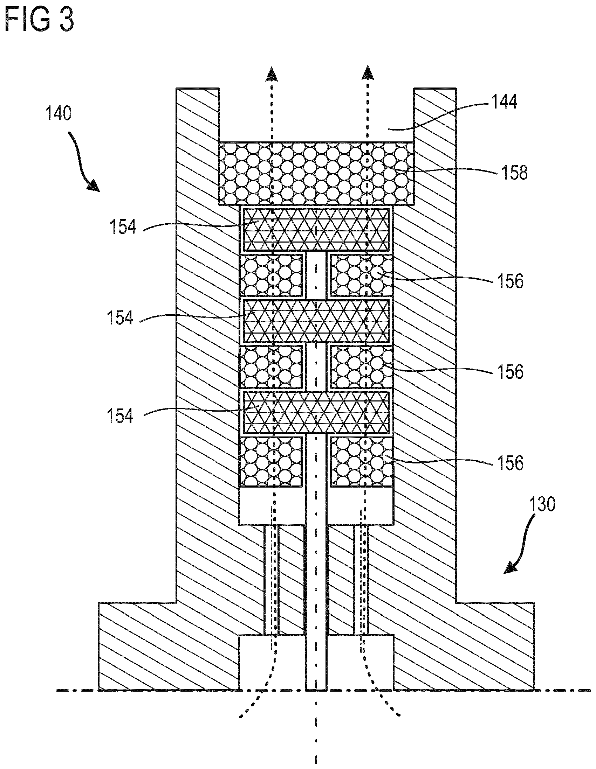

La figure 3 représente une partie supérieure du réservoir 130 avec un dispositif désaérateur 140 selon un deuxième mode de réalisation de l'invention. Cette figure 3 reprend la numérotation des figures précédentes pour les éléments identiques ou similaires, la numération étant toutefois incrémentée de 100. Des numéros spécifiques sont utilisés pour les éléments spécifiques à ce mode de réalisation.

Le rotor 146 comprend plusieurs disques 154 brassant l'air dans l'évent 144. Ils entrainent en rotation l'air traversant l'évent 144. Les disques 154 peuvent être en mousse. Ils peuvent être distants les uns des autres. Des couches statoriques (156 ; 158) de mousse peuvent être intercalées entre les disques 154 du rotor 144, par exemple de manière à former une alternance de couches (156 ; 158) et de disques 154. En sortie, l'évent 144 peut présenter une couche de sortie 158 formant un bouchon poreux captant les gouttelettes.

L'invention a été présentée en relation avec un réservoir muni d'un dispositif désaérateur. Toutefois, il est envisageable d'appliquer l'invention à un réservoir libre de dispositif désaérateur. Un rotor peut être placé dans un passage reliant l'arrivée à l'évent, sans que l'enceinte du réservoir ne favorise directement une désaération. Le dispositif désaérateur peut également être un équipement isolé, distant du réservoir. Ou encore, le dispositif désaérateur peut être intégré à l'échangeur de chaleur, par exemple son collecteur peut former une enceinte. Il peut être intégré à une pompe.

Il est également envisageable que le rotor comprenne une portion entraînée qui est introduite dans l'arrivée ou qui est devant l'arrivée. L'évent peut être dans le prolongement du rotor, et donc dans le prolongement de l'arrivée. Dans le sens normal de montage, le rotor comme l'évent peuvent être horizontaux ou sensiblement inclinés par rapport à l'horizontale. Une goulotte inclinée peut être ajoutée pour le retour par gravitation de l'huile dans l'enceinte. L'évent peut être décalé par rapport à l'axe de rotation du rotor. Le rotor peut être en dehors de l'évent. La portion entraîner peut être disposée de manière à être partiellement en contact de l'interface parabolique entre le liquide et le gaz.

## Revendications

1. Réservoir (30 ; 130) d'huile comprenant
• un dispositif désaérateur (40 ; 140) d'huile avec une enceinte (38) de désaération d'un mélange air-huile (34) liquide ;
• une arrivée (42 ; 142) du mélange (34) dans l'enceinte (38) ;
• un évent (44 ; 144) permettant une communication entre l'enceinte (38) et l'environnement du réservoir (30 ; 130) de sorte à évacuer dans l'environnement l'air issu de la désaération du mélange air-huile (34);
**caractérisé en ce que** dans l'évent (44 ; 144) le dispositif désaérateur (40 ; 140) d'huile comprend un rotor (46 ; 146) de récupération de gouttelettes d'huile en suspension dans l'air de désaération évacué par l'évent (44 ; 144) ; le rotor (46 ; 146) comprend une portion entraînée (48) apte à être entraînée en rotation par la circulation du mélange (34) air-huile, la portion entraînée (48) étant disposée en regard de l'arrivée (42 ; 142) du mélange air-huile (34).

2. Réservoir (30 ; 130) selon la revendication 1, **caractérisé en ce que** l'évent (44 ; 144) comprend un conduit entourant le rotor (46 ; 146), dans le sens normal de montage l'huile présente sur la surface interne du conduit retourne éventuellement par gravitation dans l'enceinte (38).

3. Réservoir (30 ; 130) selon l'une des revendications 1 à 2, **caractérisé en ce qu'**il est configuré de manière à ce que la rotation du rotor (46 ; 146) entraîne la centrifugation de l'air de désaération évacué via l'évent (44 ; 144).

4. Réservoir (30 ; 130) selon l'une des revendications 1 à 3, **caractérisé en ce que** la portion entraînée (48) est en forme de roue, ou de vis.

5. Réservoir (30 ; 130) selon la revendication 4, **caractérisé en ce que** la portion entraînée (48) comprend une rangée annulaire d'aubes s'étendant axialement ou radialement par rapport à l'axe de rotation du rotor (46 ; 146).

6. Réservoir (30 ; 130) selon l'une des revendications 1 à 5, **caractérisé en ce que** le rotor (46 ; 146) comprend une portion filtrante (50) avec de la mousse disposée à l'intérieur de l'évent (44 ; 144), notamment à l'intérieur de la surface interne.

7. Réservoir (30 ; 130) selon l'une des revendications 1 à 6, **caractérisé en ce que** l'évent (144) comprend une couche (156 ; 158) de mousse solidaire de l'enceinte, ladite couche étant en regard du rotor (146), éventuellement en aval ou autour du rotor (146).

8. Réservoir (30 ; 130) selon l'une des revendications 1 à 7, **caractérisé en ce que** l'évent (44 ; 144) comprend une pluralité de couches (156 ; 158) en mousse solidaires de l'enceinte, le rotor (46 ; 146) comprenant au moins un, préférentiellement plusieurs disques (154) en mousse, les couches (156 ; 158) et chaque disque 154) rotorique formant une alternance.

9. Réservoir (30 ; 130) selon l'une des revendications 1 à 8, **caractérisé en ce que** l'arrivée (42 ; 142) comprend un canal d'arrivée qui débouche de manière tangentielle dans l'enceinte (38).

10. Réservoir (30 ; 130) selon l'une des revendications 1 à 9, **caractérisé en ce que** l'arrivée (42 ; 142) comprend un module de réduction de sa section de passage de sorte à pouvoir y augmenter la vitesse d'écoulement du mélange (34).

11. Réservoir (30 ; 130) selon l'une des revendications 1 à 10, **caractérisé en ce qu'**il comprend un module d'échange de chaleur.

12. Réservoir (30 ; 130) selon l'une des revendications 1 à 11, **caractérisé en ce que** l'évent (44 ; 144) est au même niveau que l'arrivée (42 ; 142) du mélange air-huile (34).

13. Réservoir (30 ; 130) selon l'une des revendications 1 à 12, **caractérisé en ce que** l'enceinte (38) comprend une poche de largeur réduite, éventuellement cylindrique, dans laquelle est disposé le rotor (46 ; 146), et/ou dans laquelle débouche l'arrivée (42 ; 142) du mélange air-huile (34).

14. Turbomachine (2) comprenant un réservoir (30 ; 130) d'huile, **caractérisée en ce que** le réservoir (30 ; 130) d'huile est conforme à l'une des revendications 1 à 13, préférentiellement la turbomachine (2) comprend un circuit d'huile avec une pompe (28) en communication avec le dispositif désaérateur (40 ; 140) d'huile.

15. Turbomachine (2) selon la revendication 14 , **caractérisée en ce que** la pompe (28) est configurée pour que la pression du mélange air-huile (34) à l'arrivée (42 ; 142) soit supérieure ou égale à 0.5 bar, préférentiellement supérieure ou égale 3 bars, préférentiellement supérieure ou égale 7 bars.

## Patentansprüche

1. Ölbehälter (30; 130), umfassend:
• eine Ölentlüftungsvorrichtung (40; 140) mit einer Kammer (38) zum Entlüften eines flüssigen Luft-Öl-Gemischs (34);
• einen Einlass (42; 142) für das Gemisch (34) in die Kammer (38);
• eine Entlüftung (44; 144), die Kommunikation zwischen der Kammer (38) und der Umgebung des Behälters (30; 130) gestattet, um die von der Entlüftung des Luft-Öl-Gemischs (34) abgezogene Luft in die Umgebung abzuführen;
**dadurch gekennzeichnet, dass**, in der Entlüftung (44; 144), die Ölentlüftungsvorrichtung (40; 140) einen Rotor (46; 146) umfasst, der zum Sammeln von Öltröpfchen in Suspension in der durch die Entlüftung (44; 144) abgeführten entlüfteten Luft eingerichtet ist; wobei der Rotor (46; 146) einen angetriebenen Teil (48) umfasst, der fähig ist, durch die Zirkulation des Luft-Öl-Gemischs (34) in Rotation angetrieben zu werden, wobei der angetriebene Teil (48) gegenüber dem Einlass (42; 142) des Luft-Öl-Gemischs (34) angeordnet ist.

2. Ölbehälter (30; 130) nach Anspruch 1, **dadurch gekennzeichnet, dass** die Entlüftung (44; 144) eine Leitung umfasst, die den Rotor (46; 146) umgibt, wobei in der normalen Montagerichtung das an der Innenfläche der Leitung vorhandene Öl gegebenenfalls durch Schwerkraft in die Kammer (38) zurückkehrt.

3. Ölbehälter (30; 130) nach einem der Ansprüche 1 bis 2, **dadurch gekennzeichnet, dass** er so eingerichtet ist, dass die Rotation des Rotors (46; 146) das Zentrifugieren der durch die Entlüftung (44; 144) abgeführten entlüfteten Luft veranlasst.

4. Ölbehälter (30; 130) nach einem der Ansprüche 1 bis 3, **dadurch gekennzeichnet, dass** der angetriebene Teil (48) in Form eines Rades oder einer Schraube vorliegt.

5. Ölbehälter (30; 130) nach Anspruch 4, **dadurch gekennzeichnet, dass** der angetriebene Teil (48) eine ringförmige Reihe von Schaufeln umfasst, die sich axial oder radial bezüglich der Rotationsachse des Rotors (46; 146) erstrecken.

6. Ölbehälter (30; 130) nach einem der Ansprüche 1 bis 5, **dadurch gekennzeichnet, dass** der Rotor (46; 146) einen Filterteil (50) umfasst, der aus Schaumstoff besteht und im Inneren der Entlüftung (44; 144) angeordnet ist, insbesondere im Inneren der Innenfläche.

7. Ölbehälter (30; 130) nach einem der Ansprüche 1 bis 6, **dadurch gekennzeichnet, dass** die Entlüftung (144) eine an der Kammer befestigte Schaumstofflage (156; 158) umfasst, wobei besagte Lage sich gegenüber dem Rotor (146) befindet, eventuell stromabwärts von dem Rotor (146) oder um diesen herum.

8. Ölbehälter (30; 130) nach einem der Ansprüche 1 bis 7, **dadurch gekennzeichnet, dass** die Entlüftung (44; 144) eine Vielzahl von an der Kammer befestigten Schaumstofflagen (156; 158) umfasst, wobei der Rotor (46; 146) mindestens eine Schaumstoffscheibe, bevorzugt eine Vielzahl von Schaumstoffscheiben (154), umfasst, wobei die Lagen (156; 158) und jede Rotorscheibe (154) einander abwechseln.

9. Ölbehälter (30; 130) nach einem der Ansprüche 1 bis 8, **dadurch gekennzeichnet, dass** der Einlass (42; 142) einen Einlasskanal umfasst, der tangential in die Kammer (38) mündet.

10. Ölbehälter (30; 130) nach einem der Ansprüche 1 bis 9, **dadurch gekennzeichnet, dass** der Einlass (42; 142) ein Modul zum Verringern seines Durchlassquerschnitts umfasst, um die Strömungsgeschwindigkeit des Gemischs (34) an diesem Punkt erhöhen zu können.

11. Ölbehälter (30; 130) nach einem der Ansprüche 1 bis 10, **dadurch gekennzeichnet, dass** er ein Wärmetauschermodul umfasst.

12. Ölbehälter (30; 130) nach einem der Ansprüche 1 bis 11, **dadurch gekennzeichnet, dass** die Entlüftung (44; 144) sich auf demselben Niveau befindet wie der Einlass (42; 142) des Luft-Öl-Gemischs (34).

13. Ölbehälter (30; 130) nach einem der Ansprüche 1 bis 12, **dadurch gekennzeichnet, dass** die Kammer (38) ein Fach mit verringerter Breite umfasst, das zylindrisch sein kann, wobei der Rotor (46; 146) darin angeordnet ist und/oder der Einlass (42; 142) des Luft-Öl-Gemischs (34) in dieses Fach mündet.

14. Turbomaschine (2), umfassend einen Ölbehälter (30; 130), **dadurch gekennzeichnet, dass** der Ölbehälter (30; 130) in Übereinstimmung mit einem der Ansprüche 1 bis 13 ist und bevorzugt die Turbomaschine (2) einen Ölkreislauf mit einer Pumpe (28) in Kommunikation mit der Ölentlüftungsvorrichtung (40; 140) umfasst.

15. Turbomaschine (2) nach Anspruch 14, **dadurch gekennzeichnet, dass** die Pumpe (28) so eingerichtet ist, dass der Druck des Luft-Öl-Gemischs (34) an dem Einlass (42; 142) größer oder gleich 0,5 bar ist, bevorzugt größer oder gleich 3 bar, bevorzugt größer oder gleich 7 bar.

## Claims

1. Oil reservoir (30; 130) comprising:
• an oil deaeration device (40; 140) with a chamber (38) for deaerating a liquid air-oil mixture (34);
• an inlet (42; 142) for the mixture (34) into the chamber (38);
• a vent (44; 144) permitting communication between the chamber (38) and the surroundings of the reservoir (30; 130) so as to discharge the air extracted from the deaeration of the air-oil mixture (34) into the surroundings;
**characterised in that** in the vent (44; 144), the oil deaeration device (40; 140) comprises a rotor (46; 146) configured for the collection of droplets of oil in suspension in the deaerated air discharged through the vent (44; 144); the rotor (46; 146) comprising a driven portion (48) capable of being driven in rotation by the circulation of the air-oil mixture (34), the driven portion (48) being arranged opposite the inlet (42; 142) of the air-oil mixture (34).

2. Oil reservoir (30; 130) according to Claim 1, **characterised in that** the vent (44; 144) comprises a conduit surrounding the rotor (46; 146), in the normal direction of assembly the oil present on the internal surface of the conduit potentially returning by gravity into the chamber (38).

3. Oil reservoir (30; 130) according to one of Claims 1 to 2, **characterised in that** it is configured so that the rotation of the rotor (46; 146) causes the centrifuging of the deaerated air discharged via the vent (44; 144).

4. Oil reservoir (30; 130) according to one of claims 1 to 3, **characterised in that** the driven portion (48) is in the form of a wheel or screw.

5. Oil reservoir (30; 130) according to claim 4, **characterised in that** the driven portion (48) comprises an annular row of blades extending axially or radially relative to the axis of rotation of the rotor (46; 146).

6. Oil reservoir (30; 130) according to one of claims 1 to 5, **characterised in that** the rotor (46; 146) comprises a filtering portion (50) consisting of foam and arranged inside the vent (44; 144), in particular inside the internal surface.

7. Oil reservoir (30; 130) according to one of claims 1 to 6, **characterised in that** the vent (144) comprises a foam layer (156; 158) fixed to the chamber, said layer being opposite the rotor (146), potentially downstream of or around the rotor (146).

8. Oil reservoir (30; 130) according to one of claims 1 to 7, **characterised in that** the vent (44; 144) comprises a plurality of foam layers (156; 158) fixed to the chamber, the rotor (46; 146) comprising at least one foam disc, preferably a plurality of foam discs (154), the layers (156; 158) and each rotor disc (154) alternating with one another.

9. Oil reservoir (30; 130) according to one of claims 1 to 8, **characterised in that** the inlet (42; 142) comprises an inlet channel which opens tangentially into the chamber (38).

10. Oil reservoir (30; 130) according to one of claims 1 to 9, **characterised in that** the inlet (42; 142) comprises a module for reducing its passage cross section so as to be able to increase the speed of flow of the mixture (34) at that point.

11. Oil reservoir (30; 130) according to one of claims 1 to 10, **characterised in that** it comprises a heat exchanger module.

12. Oil reservoir (30; 130) according to one of claims 1 to 11, **characterised in that** the vent (44; 144) is at the same level as the inlet (42; 142) of the air-oil mixture (34).

13. Oil reservoir (30; 130) according to one of claims 1 to 12, **characterised in that** the chamber (38) comprises a pocket of reduced width, which may be cylindrical, the rotor being arranged (46; 146) therein and/or the inlet (42; 142) of the air-oil mixture (34) opening into said pocket.

14. Turboengine (2) comprising an oil reservoir (30; 130), **characterised in that** the oil reservoir (30; 130) is in accordance with one of claims 1 to 13, and preferably the turboengine (2) comprises an oil circuit with a pump (28) in communication with the oil deaerating device (40; 140).

15. Turboengine (2) according to claim 14, **characterised in that** the pump (28) is configured so that the pressure of the air-oil mixture (34) at the inlet (42; 142) is greater than or equal to 0.5 bar, preferably greater than or equal to 3 bar, preferably greater than or equal to 7 bar.
